# EUROPÄISCHE PATENTANMELDUNG

(11) **EP 0 856 967 A2**
(43) Veröffentlichungstag der Anmeldung: **05.08.1998**
(21) Anmeldenummer: 98101310.5
(22) Anmeldetag: 26.01.1998
(51) Int. Cl.: H04L 7/04

(54) **Verfahren zum Suchen von Synchronisiermustern in seriellen, paketorientierten und gemultiplexten Datenströmen**

(30) Priorität: 31.01.1997 DE 19703613
(71) Anmelder: SIEMENS AKTIENGESELLSCHAFT, 80333 München (DE)
(72) Erfinder: Lenger, Manfred, 1010 Wien (AT); Egler, Gerhard, 81476 München (DE)

(57) **Zusammenfassung**

Die m Bits eines Synchronisiermusters (SW) sind kontinuierlich in jedes n-te Paket (P) eines Datenstromes (DS) eingefügt. Jeweils ein Bit von erfaßten, n Pakete (P) umfassenden Bits des seriellen Datenstromes (DS) wird jeweils in einer eine Bitposition innerhalb von n Paketen (P) repräsentierende Speicherzelle (1..4) von zugordneten, m (4) Speicherzellen (1..4) breiten Speichern (Ze1..80) gespeichert, wobei die Anzahl der Speicher (Ze1.. 80) durch n x Anzahl der Bits pro Paket (P) bestimmt ist. Bei Erkennen eines Bitmusters (SW) in einem der Speicher (Ze1..80) ist durch diesen die Bitposition des Bitmusters (SW) im seriellen Datenstrom (DS) bestimmt.

## Beschreibung

Gemäß dem ITU-Standard G.728 werden codierte Sprachsignale paketorientiert in PCM-orientierten, gemultiplexten Datenströmen übertragen. Hierbei umfaßt ein Paket jeweils 10 Bit (625µs) bzw. ein PCM-Datenwort 8 Bit (125µs) . Bei einem gemultiplexten, seriellen Datenstrom sind beispielsweise in PCM-Datenworte 4 komprimierte, codierte Sprachsignale repräsentierende Datenströme gemultiplext. Dies bedeutet, daß in jedem PCM-Datenwort 2 Bit für den jeweiligen paketorientierten Datenstrom gemäß G.728 übertragen werden, wobei ein Paket (10 Bit) aus 5 Teilpaketen a 2 Bit gebildet ist.

Des weiteren sind gemäß der ITU-Empfehlung G.728 in jeden Datenstrom vorgegebene Bitmuster, d.h. Synchronisierwörter eingefügt. Die Bits des Bitmusters bzw. der Synchronisierwörter sind kontinuierlich in jedes n-te Paket des Datenstromes eingefügt - beispielsweise in jedes sechzehnte Paket bzw. G.728 - Datenwort. Ist ein vorgegebenes Bitmuster bzw. Synchronisierwort durch m - beispielsweise 4 - Bits gebildet, so wird nach n x m x 10 (Paketlänge) - Bits eines paketorientierten Datenstromes ein vorgegebenes Bitmuster bzw. Synchronisierwort übertragen - bei einer Wortbreite von 4 Bit und einer Wiederholungsrate von 16 Paketen (a 10 Bit) ist ein Synchronisierwort nach 640 Bits des paketorientierten Datenstromes übertragen.

Bei gemultiplexten Datenströmen wird in dem jeweiligen Paket zumindest ein Bit einem Datenstrom zugeordnet. Beispielsweise werden vier gemäß G.728 codierte Datenströme zu einem gemultiplexten, PCM-orientierten Datenstrom zusammengefaßt. Hierbei werden von einem Paket jeweils 2 Bit (Teilpaket) dem jeweiligen, PCM-orientierten Datenstrom zugeordnet. Die einzelnen Bits des Synchronisierwortes werden hierbei in dem ersten Bit, d.h. dem 'most significant bit' übertragen.

Die der Erfindung zugrunde liegende Aufgabe besteht darin, die Synchronisierworte in seriellen, paketorientierten und ggfs. gemultiplexten Datenströmen in kürzester Zeit zu finden. Die Aufgabe wird durch die Merkmale des Patentanspruchs 1 gelöst.

Der wesentliche Aspekt des erfindungsgemäßen Verfahrens ist darin zu sehen, daS jeweils ein Bit von erfaßten, n Pakete umfassenden Bits des seriellen Datenstromes in einer eine Bitposition innerhalb von n Paketen repräsentierende Speicherzelle von zugordneten, m Speicherzellen breiten Speichern gespeichert wird, wobei die Anzahl der Speicher durch n x Anzahl der Bits pro Paket bestimmt ist. Die Speicher werden auf Vorliegen eines Bitmusters überprüft. Bei Erkennen eines Bitmusters in einem der Speicher ist durch diesen die Bitposition des Bitmusters im seriellen Datenstrom bestimmt. Bei gemultiplexten, paketorientierten Datenströmen ist in jedem gemultiplexten Paket jedem Datenstrom eine gleiche Anzahl von aufeinander folgenden Bits zugeordnet, wobei die Bits der Bitmuster in jedes n-te Paket des jeweiligen Datenstromes eingefügt sind. Bei Erkennen eines Bitmusters in einem der einen Datenstrom zugeordneten Speicher ist durch dieses die Bitposition des jeweiligen Bitmusters im gemultiplexten, seriellen Datenstrom bestimmt - Anspruch 2.

Gemäß einer vorteilhaften Weiterbildung des erfindungsgemäßen Verfahrens wird bei x (x≥1) aufeinanderfolgenden Bits - Teilpaket - eines Pakets eines Datenstroms in einem gemultiplexten Paket jeweils ein vorgegebenes Bit der x Bits in einem zugordneten, m Speicherzellen breiten Speicher gespeichert wird, wobei in eine Speicherzelle des m Speicherzellen breiten Speichers jeweils das vorgegebene Bit von x aufeinanderfolgenden Bits innerhalb der gemultiplexten Pakete kopiert wird - Anspruch 3. Diese Maßnahme ist insbesondere bei Synchronwörtern vorteilhaft, deren Bits jeweils am Beginn eines Pakets eingefügt sind. Hierbei müssen insbesondere bei gemultiplexten Bitströmen die Bits, die nach dem ersten Bit eines Teilpakets eines Datenstromes in dem jeweiligen gemultiplexten Paket folgen, nicht mehr untersucht, d.h. gespeichert und bewertet werden.

Nach einer ersten Variante werden in einem Speicher erkannte Bitmuster (SW) nach jeweils n x m Paketen des jeweiligen Datenstromes durch einen dem Speicher zugeordneten Zählerstand einer ersten Zähleinrichtung gezählt wird und nach einer vorgegebenen Anzahl von erkannten Bitmustern als erkanntes Bitmuster bestimmt - Anspruch 4. Durch diese Maßnahme kann ein mehrfaches Auffinden von vorgegebenen Bitmustern bzw. Synchronisierwörtern in den Datenströmen vermieden werden.

Nach einer vorteilhafteren weiteren Variante wird ein Erkennen eines Bitmusters nach jeweils n x m Paketen des jeweiligen Datenstromes durch einen betreffenden, zugeordneten Zählerstand einer ersten Zähleinrichtung gezählt. Bei einem Nicht-Erkennen des betreffenden Bitmusters wird der betreffende Zählerstand der ersten Zähleinrichtung zurückgesetzt und bei Erreichen einer vorgegebenen Anzahl von erkannten Bitmustern ist das betreffende Bitmuster bzw. Synchronisierwort als erkanntes Bitmuster bzw. Synchronisierwort bestimmt - Anspruch 5. Durch diese Maßnahme wird die Sicherheit hinsichtlich des Erkennens eines vorgegebenen Bitmusters bzw. Synchronisierwortes in einem Datenstrom erheblich gesteigert. Dies wird dadurch erreicht, daß auch bei einem einmaligen Nicht-Erkennen eines Bitmusters der Zähler rückgesetzt, d.h. auf einen Anfangswert zurückgesetzt wird. Treten zwei oder mehrere, eine vorgegebene Anzahl von erkannten Bitmustern in dem jeweiligen Datenstrom auf, so ist die vorgegebene Anzahl zu erhöhen - Anspruch 6. Durch die Erhöhung der vorgegebenen Anzahl wird die Sicherheit zur Erkennung eines vorgegebenen Bitmusters bzw. Synchronisierwortes weiter erhöht.

Weitere vorteilhafte Ausgestaltungen des erfindungsgemäßen Verfahrens sind den weiteren Ansprüchen zu entnehmen.

Im folgenden wird das erfindungsgemäße Verfahren anhand zweier Blockschaltbilder und eines Ablaufdiagrammes näher erläutert. Dabei zeigen
- FIG 1: in einem Blockschaltbild einen seriellen, gemultiplexten Datenstrom sowie eine erfindungsgemäße Speichereinrichtung,
- FIG 2: in einem Blockschaltbild die erfindungsgemäße Speicher und Zählerstruktur und
- FIG 3: in einem Ablaufdiagramm das erfindungsgemäße Verfahren gemäß der Ausgestaltung in FIG 1 und FIG 2.

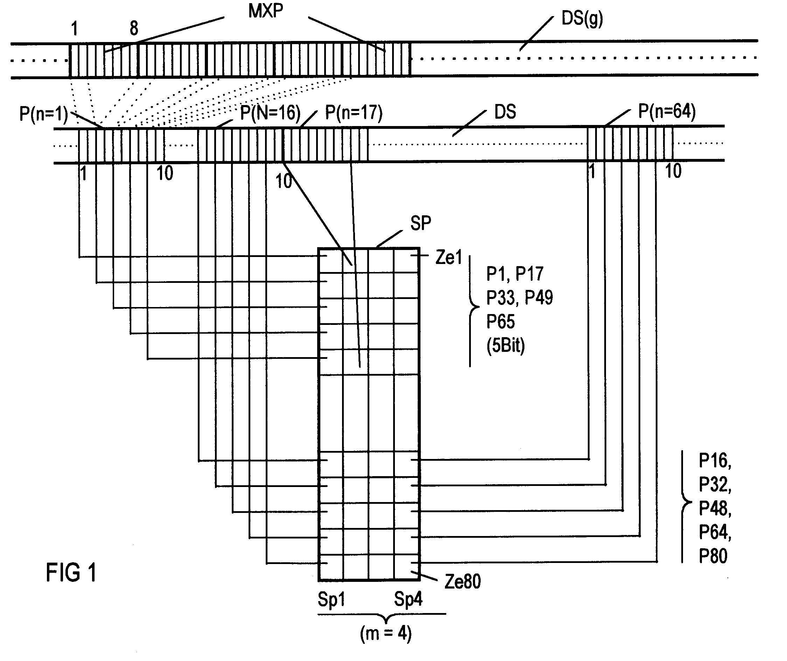

FIG 1 zeigt teilweise einen gemultiplexten, PCM-orientierten Datenstrom DS(g), der durch seriell aneinandergefügte, gemultiplexte Pakete MXP bzw. Datenpakete MXP gebildet ist - beispielhaft sind in FIG 1 fünf gemultiplexte Pakete MXP dargestellt. Für das Ausführungsbeispiel sei angenommen, daß ein gemultiplextes Datenpaket MXP acht Bit umfaßt und in jedes Datenpaket MXP vier Datenströme DS gemultiplext sind, wobei jedem Datenstrom DS jeweils zwei aufeinanderfolgende Bits - ein Teilpaket bildend - in einem gemultiplexten Datenpaket MXP zugeordnet sind. Die Datenströme DS sind jeweils durch Datenpakete P gebildet, die jeweils zehn Bit umfassen - beispielhaft ist einer der vier Datenströme DS dargestellt. Beim Ausführungsbeispiel stellen die Datenströme DS digitalisierte Sprachinformationen mit jeweils einer Übertragungsrate von 16 kbit/s dar, die nach dem ITU-Standard G.728 komprimiert sind, wobei die komprimierten, digitalisierten Sprachinformationen in zehn Bit umfassende Datenpakete P eingebettet sind.

Die Patenpakete P der Datenströme DS enthalten Synchronisierwörter SW bzw. Synchronisierbitmuster, mit deren Hilfe nach einer Übertragung über eine Übertragungsstrecke der Anfang eines Paketes P ermittelt wird. Anschließend kann eine Dekomprimierung der nach ITU-Standard G.728 komprimierten Sprachinformationen durchgeführt werden. Da durch die Synchronisierwörter SW der Anfang eines Paketes P ermittelt werden soll, sind die einzelnen Bits der Synchronisierwörter SW jeweils am Anfang eines Paketes P eingefügt. Desweiteren sind die Bits eines Synchronisierwortes SW nicht in jedes Datenpaket P sondern in jedes n-te Datenpaket P eingefügt. Beim Ausführungsbeispiel ist angenommen, daß in jedes sechzehnte Datenpaket P ein Bit eines Synchronisierwortes SW eingebettet ist. Dies bedeutet, daß bei einem vier Bit umfassenden Synchronisierwort SW ein vollständiges Synchronisierwort SW nach 640 Bit eines Datenstromes DS bzw. nach 2560 Bit eines gemultiplexten Datenstromes DS(g) übermittelt wird.

Da die einzelnen Bits der Synchronisierworte jeweils am Anfang eines Datenpakets P auftreten und bei einem zu übermittelnden Datenstrom DS jeweils das erste und zweite, das dritte und vierte, das fünfte und sechste, das siebente und achte sowie das neunte und zehnte Bit eines Paketes P jeweils in die zwei zugeordneten Bits des gemultiplexten Datenpaketes MXP gemultiplext werden, wird zum Auffinden des Synchronisierwortes SW in einem Datenstrom DS nur jeweils das erste der zwei Bits des gemultiplexten Datenpaketes MXP herangezogen. Dies bedeutet, daß anstelle der 10 Bit eines Datenpakets P eines Datenstromes DS lediglich 5 Bits zum Auffinden des Synchronisierwortes SW untersucht werden müssen. Folglich werden - siehe FIG 1 - das erste, dritte, fünfte, siebente und neunte Bit des ankommenden Datenstromes DS in eine erste Speicherzelle eines ersten, zweiten, dritten, vierten und fünften Speichers bzw. einer Zeile Ze1..5 einer Speichereinrichtung SP kopiert, wobei die ersten Speicherzellen jeweils eine erste Spalte Sp1 der Speichereinrichtung SP bilden. Analog hierzu wird für jedes folgende Paket P - in FIG 1 ist beispielhaft ein Datenstrom DS mit einer Speichereinrichtung SP dargestellt - jedes erste der zwei Bits eines gemultiplexten Datenpaketes MXP in die erste Speicherzelle bzw. Spalte Sp1 der folgenden sechsten bis achzigsten Speicher bzw. Zeilen Ze6..80 kopiert. Dieser Vorgang wird beginnend mit der zweiten Speicherzelle bzw. Spalte Sp2 des ersten Speichers bzw. der ersten Zeile Ze1 solange durchgeführt, bis in die achzig Speicher bzw. Zeilen Ze1..80 der vier Spalten Sp1..5 der Speichereinrichtung SP die zu Beginn ankommenden Bits eines Datenstromes DS kopiert sind. Durch diese Art des Kopierens der Bits eines Datenstromes DS wird jedes erste, dritte, fünfte, siebente und neunte Bit im Abstand von 16 Paketen in jeweils eine Zeile1..80 eingetragen.

Stehen die einzelnen Bits des Synchronisierwortes beispielsweise an beliebiger Stelle, so ist ggfs. nicht für jedes zweite Bit ein Speicher bzw. eine Zeile Ze, sondern für jedes ankommende Bit des jeweiligen Datenstromes DS ein Speicher bzw. eine Zeile Ze vorzusehen. Dies bedeutet bezogen auf das Ausführungsbeispiel, daß nicht 80 Speicher bzw. Zeilen Ze1..80, sondern 160 Speicher bzw. Zeilen Ze in der Speichereinrichtung SP vorzusehen sind. Ist für jedes ankommende Bit ein Speicher bzw. eine Zeile Ze in der Speichereinrichtung SP vorgesehen, so ist durch n x die Anzahl der Bits pro Paket P die erforderliche Anzahl von Speichern bzw. Zeilen Ze in der Speichereinrichtung SP bestimmt. Bei einer vorteilhaften Speicherung jedes zweiten Bits eines Synchronisierwortes gemäß dem Ausführungsbeispiel - ergibt sich durch das Multiplexen von jeweils 2 Bit - halbiert sich die erforderlichen Anzahl von Speichern bzw. Zeilen Ze, d.h. 80 Zeilen Ze1..80. Eine weitere Reduzierung von Speichern bzw. Zeilen Ze wird bei einem Multiplexen von beispielsweise 3 oder 4 Bit je Datenstrom DS erreicht, wobei die Bits des Synchronisierwortes SW jeweils am Beginn oder an einer definierten Bitposition eines Paketes P eingefügt sind.

Die m (m=4) Speicherzellen umfassenden Zeilen Ze1..80 werden auf das Vorliegen eines Synchronisierwortes SW untersucht, d.h. die vier gespeicherten Bits einer Zeile1..80 werden mit den vier ein Synchronisierwort SW umfassenden Bits verglichen. Hierbei kann ein Synchronisierwort SW auch durch eine beliebige Bitkombination bestimmt sein. Für das Ausführungsbeispiel sei angenommen, daß in der siebten Zeile Ze7 das Synchronisierwort auftritt. Dies bedeutet, daß der Beginn eines Datenpaketes P, durch das auch der Beginn eines Synchronisierwortes SW bestimmt ist, mit dem dritten Bit im zweiten Datenpakt P bestimmt ist. Zur Dekomprimierung und Abtastung des jeweiligen Datenstromes DS wird als Ausgangsbasis der ermittelte Beginn eines bzw. weiterer Datenpakete P bzw. der Beginn des Synchronisierwortes SW herangezogen.

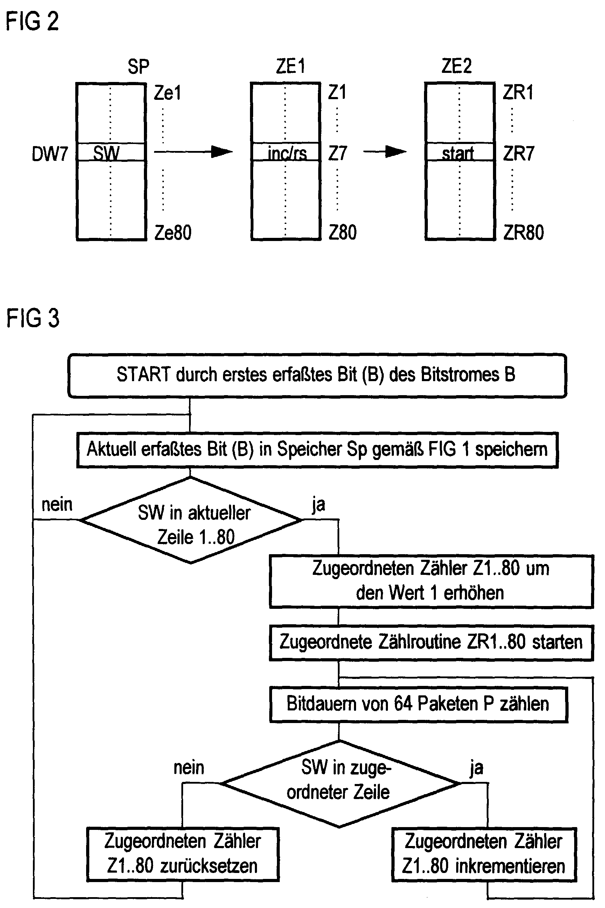

Da es bei den übermittelten Datenströmen DS zu einem zufälligen, mehrfachen Auftreten von Synchronisierworten SW kommen kann, wird mit Hilfe von zwei nachgeordneten Zähleinrichtungen ZE1,2 das mehrfache, kontinuierliche Auftreten von Synchronisierworten SW festgestellt, wobei jedem Speicher bzw. jeder Zeile Ze1..80 der Speichereinrichtung SP eine erste und eine zweite Zähleinrichtung ZE1,2 zugeordnet ist - in FIG 2 für alle achzig Zeilen Ze1..80 mit der Bezeichnung ZE1 und ZE2 angedeutet. Hierbei wird das Auftreten eines Synchronisierwortes SW in einem der achzig Zeilen Ze1..80 in der jeweils zugeordneten ersten Zähleinrichtung ZE1 durch Inkrementieren des aktuellen Zählerstandes Z1..80 festgestellt. Durch das Feststellen eines Synchronisierwortes SW wird in der zweiten Zähleinrichtung ZE2 eine Zählroutine ZR1..80 gestartet. Da beim Ausführungsbeispiel in der siebten Zeile Ze7 ein Synchronisierwort SW auftritt, wird der siebte Zählerstand Z7 der ersten Zähleinrichtung ZE1 inkrementiert, d.h. bei einem Ausgangszählerstand von Null um den Wert 1 erhöht. Hierdurch wird die siebte Zählroutine ZR7 gestartet.

Die Funktion der Zählroutinen ZR1..80, d.h. auch der siebten Zählroutine ZR7, ist anhand eines Ablaufdiagrammes in FIG 3 dargestellt. Durch diese Zählroutine ZR1..80 wird jeweils nach 64 Paketen P überprüft, ob in der betreffenden Zeile Ze1..80 - bei Ausführungsbeispiel Zeile Ze7 - das Synchronisierwort SW auftritt. Tritt ein Synchronisierwort SW auf, wird der betreffende Zählerstand Z7 der ersten Zähleinrichtung ZE1 inkrementiert. Tritt kein Synchronisierwort SW in der betreffenden Zeile Ze1..80 auf, wird der betreffende Zählerstand Z1..80 der erste Zähleinrichtung ZE1 auf einen Ausgangswert - überlicherweise der Wert Null - zurückgesetzt. Ist der größte Zählerstandes Z1..80 der ersten Zähleinrichtung ZE1 um einen vorgegebenen Wert - beispielsweise zwei - größer als der zweitgrößte Zählerstand Z1..80, so ist durch die dem größten Zählerständ zugeordnete Zeile Ze1..80 das einen Beginn eines Paketes P bzw. eines Synchronisierwortes SW repräsentierende Bit eines Datenpaketes P bestimmt.

Mit Hilfe des erfindungsgemäßen Verfahren kann ein Synchronisierwort SW in nach G.728 strukturierten und gemultiplexten Datenströmen DS(g) in kürzester Suchzeit gefunden werden, wobei für die Überprüfung des weiteren Auftretens des gefundenen Synchronisierwortes SW lediglich der betreffende Zählerstand der ersten Zähleinrichtungen ZE1 bearbeitet wird und die betreffende Zählroutine ZR1..80 der zweiten Zähleinrichtung ZE2 aktiv ist. Die verbleichenden Speicher bzw. Zeilen Ze der Speichereinrichtung SP und die weiteren Zählerstände Z bzw. Zählroutinen ZR der ersten und zweiten Zähleinrichtung ZE1,2 sind nicht mehr erforderlich. Diese werden erst nach einem Feststellen fehlender Synchronisierworte SW wieder aktiviert, d.h. die ankommenden Datenpakete P werden gemäß FIG 1 speichert und überprüft.

## Patentansprüche

1. Verfahren zum Suchen eines durch m (m≥1) vorgegebene Bits gebildeten Bitmusters (SW) in einem seriellen, paketorientierten Datenstrom (DS), wobei die Bits des Bitmusters (SW) kontinuiertlich in jedes n-te (n≥1) Paket (P) des Datenstromes (DS) eingefügt sind,
- bei dem jeweils ein Bit von erfaßten, n Pakete (P) umfassenden Bits des seriellen Datenstromes (DS) in einer eine Bitposition innerhalb von n Paketen (P) repräsentierende Speicherzelle (1..4) von zugordneten, m (4) Speicherzellen (1..4) breiten Speichern (Ze1..80) gespeichert wird, wobei die Anzahl der Speicher (Ze1.. 80) durch n x Anzahl der Bits pro Paket (P) bestimmt ist,
- bei dem die m Speicherzellen (1..4) breiten Speicher (Ze1..80) auf Vorliegen eines Bitmusters (SW) überprüft werden, und
- bei dem bei Erkennen eines Bitmusters (SW) in einem der Speicher (Ze1..80) durch diesen die Bitposition des Bitmusters (SW) im seriellen Datenstrom (DS) bestimmt ist.

2. Verfahren nach Anspruch 1, dadurch **gekennzeichnet,**
- daß bei gemultiplexten, paketorientierten Datenströmen (DS(g)) in jedem gemultiplexten Paket (MXP) jedem Datenstrom (DS) eine gleiche Anzahl von aufeinanderfolgenden Bits zugeordnet ist, wobei die Bits der Bitmuster (SW) in jedes n-te Paket (P) des jeweiligen Datenstroms (DS) eingefügt sind, und
- daß bei einem Erkennen eines Bitmusters (SW) in einem der einen Datenstrom (DS) zugeordneten Speicher (Ze1..80) durch diesen die Bitposition des jeweiligen Bitmusters (SW) im gemultiplexten, seriellen Datenstrom (DS(g)) bestimmt ist.

3. Verfahren nach nach Anspruch 2, dadurch **gekennzeichnet,** daß bei x (x≥1) aufeinanderfolgenden Bits eines Paket (P) eines Datenstroms (DS) in einem gemultiplexten Paket (MXP) jeweils ein vorgegebenes Bit der x Bits in einem zugordneten, m Speicherzellen breiten Speicher (Ze1..80) gespeichert wird, wobei in eine Speicherzelle des m Speicherzellen breiten Speichers (Ze1..80) jeweils das vorgegebene Bit von x aufeinanderfolgenden Bits innerhalb der gemultiplexten Pakete (MXP) kopiert wird.

4. Verfahren nach einem der Ansprüche 1 bis 3, dadurch **gekennzeichnet,**
- daß ein in einem Speicher (Ze1..80) erkanntes Bitmuster (SW) nach jeweils n x m Paketen (P) des jeweiligen Datenstromes (DS) durch einen dem Speicher (Ze1..80) zugeordneten Zählerstand Z1..80 einer ersten Zähleinrichtung (ZE1) gezählt wird, und
- daß nach einer vorgegebenen Anzahl von erkannten Bitmustern (SW) dieses als erkanntes Bitmuster (SW) bestimmt ist.

5. Verfahren nach einem der Ansprüche 1 bis 3, dadurch **gekennzeichnet,**
- daß ein Erkennen eines Bitmusters(SW) nach jeweils n x m Paketen (P) des jeweiligen Datenstromes (DS) durch einen betreffenden, zugeordneten Zählerstand (Z1..80) einer ersten Zähleinrichtung (ZE1) gezählt wird,
- daß bei einem Nicht-Erkennen des betreffenden Bitmusters (SW) der betreffende Zählerstand (Z1..80) der ersten Zähleinrichtung (ZE1) zurückgesetzt wird, und
- daß bei Erreichen einer vorgegebenen Anzahl von erkannten Bitmustern (SW) das betreffende Bitmuster (SW) als erkanntes Bitmuster (SW) bestimmt ist.

6. Verfahren nach Anspruch 4 oder 5, dadurch **gekennzeichnet,** daß bei zwei oder mehreren eine vorgegebene Anzahl erkannten Bitmustern (SW) in dem jeweiligen Datenstrom (DS) die vorgegebene Anzahl erhöht wird.

7. Verfahren nach einem der vorhergehenden Ansprüche, dadurch **gekennzeichnet,** daß die Bitmuster (SW) durch beliebig vorgegebbare und im Betrieb änderbare Synchronisiermuster bzw. Sychroniersierworte (SW) repräsentiert sind.

8. Verfahren nach einem der vorhergehenden Ansprüche, dadurch **gekennzeichnet,** daß der paketorientierte Datenstrom (DS) gemäß dem ITU-Standard G.728 strukturiert ist, wobei ein zehn Bit umfassendes Paket (P) ein kodiertes Sprachsignal repräsentiert ist.

9. Verfahren nach einem der vorhergehenden Ansprüche, dadurch **gekennzeichnet,** daß ein gemultiplexter Datenstrom (DS(g)) durch PCM-orientierte, gemultiplexte Pakete (MXP) gebildet ist, daß in jedem acht Bit umfassenden, gemultiplexten Datenpaket (P) zumindest ein Bit eines gemäß ITU-Standard G.728 strukturierten Datenstromes (DS) zugeordnet ist, wobei die Anzahl von aufeinanderfolgenden, zugeordneten Bits von der Übertragungsrate des gemultiplexten Datenstromes (DS(g)) und des jeweiligen Datenstromes (DS) bestimmt wird.
